# EUROPÄISCHE PATENTANMELDUNG

(11) **EP 2 544 299 A1**
(43) Veröffentlichungstag der Anmeldung: **09.01.2013**
(21) Anmeldenummer: 12170389.6
(22) Anmeldetag: 01.06.2012
(51) Int. Cl.: H01Q 1/12, H01Q 1/22, H01M 2/10

(54) **Vorrichtung zur Halterung einer Antenne und einer Batterie**

(30) Priorität: 06.07.2011 DE 102011107303
(71) Anmelder: Techem Energy Services GmbH, 65760 Eschborn (DE)
(72) Erfinder: Soldat, Florian, 65195 Wiesbaden (DE); Reus, Jürgen, 63579 Freigericht (DE)
(74) Vertreter: KEIL & SCHAAFHAUSEN Patentanwälte

(57) **Zusammenfassung**

Die Erfindung betrifft eine Vorrichtung zur Halterung einer Antenne (2) und einer Batterie (3) auf einer Platine (4), insbesondere für ein Funkmodul zur drahtlosen Übertragung von Daten, mit einer Batterieauflagefläche (5) für die Batterie (3) und einer Antennenauflagefläche (10) für die Antenne (2). Um eine reproduzierbar hohe Abstrahlleistung der Antenne zu erreichen wird vorgeschlagen, dass die Antennenauflagefläche (10) an einem Träger (6) vorgesehen ist, welcher einstückig mit der Batterieauflagefläche (5) verbunden ist, und dass zwischen dem Träger (6) und der Batterieauflagefläche (5) ein Aufnahmeraum (7) für die Batterie (3) ausgebildet ist.

## Beschreibung

Die Erfindung betrifft eine Vorrichtung zur Halterung einer Antenne und einer Batterie auf einer Platine, insbesondere für ein Funkmodul zur drahtlosen Übertragung von Daten, mit einer Batterieauflagefläche für die Batterie und einer Antennenauflagefläche für die Antenne.

Verbrauchserfassungsgeräte, die den Verbrauch von Wärme, Kälte, Wasser, Gas oder Strom in Wohn- oder Gewerbegebäuden messen, werden typischerweise batteriebetrieben und übertragen die Verbrauchswerte drahtlos über ein Funkmodul an als Empfänger dienende Datensammler, welche sie speichern und bspw. zu einer Auswerteeinheit weiterleiten. Der Wirkungsgrad der für die Übertragung üblicherweise eingesetzten Blechantennen hängt u.a. stark von den umgebenden Bauteilen ab, die die abgegebene elektrische Leistung der Antenne reduzieren können.

Aufgrund der kompakten Bauweise heutiger Elektronikgeräte, ist es nicht möglich, die störenden Bauteile ausreichend weit entfernt von der Antenne zu positionieren. Um die Reduzierung der Antennenleistung dennoch möglichst gering zu halten, sollten alle Bauteile genau zueinander ausgerichtet und in dieser Position fixiert sein, damit sich die Bauteile durch den Transport oder andere äußere Einflüsse nicht zueinander verschieben.

Ähnliche Probleme stellen sich bei Mobilfunkgeräten. So wird beispielsweise in der DE 10 2006 037 803 A1 eine Antenne eines kabellosen Kommunikationsendgeräts mittels einer Vielzahl von Befestigungslöchern und zugehörigen Befestigungsvorsprüngen an einem Sockel befestigt. Der als Antennenhalter dienende Sockel weist an seiner Unterseite mehrere Haken auf, mit denen er in entsprechende Montagelöcher der Platine eingerastet wird. Die Anordnung der Batterie wird nicht beschrieben.

Bei dem aus der DE 10 2006 037 244 A1 bekannten mobilen Kommunikationsgerät mit integrierter Schlitzantenne wird die Antenne über Befestigungsmittel, bspw. Nietverbindungen, mit einer Funkmodul-Befestigungsvorrichtung verbunden. Die Funkmodul-Befestigungsvorrichtung ist über eine Rast- oder Schnappverbindung an einem Schaltungsträger befestigt. Auch hier wird die Montage der Batterie nicht beschrieben.

Ein elektronischer Baustein zur Herstellung einer Sende-/Empfangseinheit für Fahrzeuge ist aus der DE 10 2006 004 444 B4 bekannt. In einem Gehäuseteil ist eine Antenne mit Antennenpins vorgesehen, an welche eine Leiterplatte bspw. mittels des Press-Fit-Verfahrens angeschlossen und befestigt wird. Säulenförmige Erhöhungen an dem Gehäuseteil dienen als weitere Stützpunkte für die Leiterplatte. Die Antenne soll damit besser fixiert sein, und es soll eine Beeinträchtigung der Sende-/Empfangseinheit durch Vibrationen verhindert werden. Die Energieversorgung erfolgt extern über einen Stecker.

Bekannt ist es außerdem, die Bauteile mittels einer Montagevorrichtung zueinander auszurichten. Dieser Prozess ist allerdings zeitaufwendig, da viele Zusatzschritte notwendig sind. Erschwerend kommt hinzu, dass die Bauteile nach der Herstellung nicht gegen Verrutschen gesichert sind. Alternativ werden die Bauteile durch herkömmliche Befestigungsprozesse verbunden, bspw. durch Ultraschall-Vernieten. Auch dies ist allerdings teuer und aufwendig.

Aufgabe der vorliegenden Erfindung ist es daher, die für die Antennenleistung relevanten Bauteile einfach und mit stabiler Zuordnung an einer Platine anzubringen und dadurch eine reproduzierbar hohe Abstrahlleistung der Antenne zu gewährleisten.

Diese Aufgabe wird erfindungsgemäß mit den Merkmalen des Anspruch 1 im Wesentlichen dadurch gelöst, dass die Antennenauflagefläche an einem Träger vorgesehen ist, welcher einstückig mit der Batterieauflagefläche verbunden ist, und dass zwischen dem Träger und der Batterieauflagefläche ein Aufnahmeraum für die Batterie ausgebildet ist.

Durch den Antennenhalter wird zwischen der Antenne und der Batterie ein fest definierter Abstand gewährleistet. Die Positionierung dieser beiden Bauelemente relativ zueinander ist besonders kritisch, da die Leistung der Antenne sehr stark durch den metallenen Körper der Batterie beeinflusst wird. Eine im Wesentlichen planparallele Ausrichtung der beiden Bauteile führt erfahrungsgemäß dazu, dass die Antennenleistung geringstmöglich durch den Batteriekörper verringert wird. Ebenso wird die Abstrahlcharakteristik der Antenne nur minimal beeinflusst. Der einstückige Aufbau des Antennenhalters ermöglicht eine einfache und schnelle Montage ohne viele Teile, wobei die Positionierung von Antenne und Batterie reproduzierbar und stabil vorgegeben werden kann.

In Weiterentwicklung dieses Erfindungsgedankens übergreift der Träger die Batterieauflagefläche. Dies ermöglicht die gestaffelte Anordnung der Platine, die zumeist in Form einer Leiterplatte (PCB) realisiert wird, der Batterie und der Antenne. Die Antenne befindet sich dabei vorteilhafterweise am oberen Teil dieser Anordnung. Dadurch ist sichergestellt, dass die Antenne in eine Richtung frei von störendem Material abstrahlen kann und eine maximale Abstrahlcharakteristik erreicht wird.

Daher ist es in einer bevorzugten Ausführungsform auch vorhergesehen, dass die Antennenauflagefläche nicht flächig sondern durch Stege gebildet wird, die von dem Träger vorstehen. Dies reduziert das Material, das sich unterhalb der Antenne befindet, im Vergleich zu einer flächigen Anordnung deutlich. Entsprechend lassen sich die Abstrahlcharakteristik und die Leistungseffizienz weiter verbessern.

In Weiterbildung dieses Erfindungsgedanken sind die Stege als Doppelkreuz ausgebildet. Dies ermöglicht eine verwindungssteife und kippfeste Halterung der Antenne bei minimalem Materialeinsatz. Besonders wichtig ist eine solche Ausführungsform bei flachen Antennen.

Im Rahmen des Einsatzes einer erfindungsgemäßen Vorrichtung in einem Funkmodul ist es vorteilhaft, wenn die einzelnen Bauteile gegen Verrutschen gesichert sind, damit sie auch während eines Transportes in der gewünschten Orientierung zueinander verbleiben. Indem erfindungsgemäß an dem Träger wenigstens ein Arretierungsstift und/oder wenigstens ein Positionierungsstift zur Fixierung der Antenne vorgesehen ist/sind, werden die einzelnen Bauteile gegen Verrutschen gesichert und verbleiben damit auch während eines Transportes in der gewünschten Orientierung zueinander. Zusätzlich kann hierdurch auf notwendige Montage- oder Fertigungshilfsmittel verzichtet werden. Durch den wenigstens einen Positionierungsstift wird die Position der Antenne in zwei Raumebenen vorgegeben, während der Arretierungsstift die Antenne zusätzlich noch in der dritten Raumebene arretiert.

Eine zuverlässige Positionierung der Batterie kann mit der Erfindung auch dadurch erreicht werden, dass die Batterieauflagefläche durch eine im Wesentlichen kreisförmige Platte gebildet wird. Hierbei wurde berücksichtigt, dass Standard-Batterien für Funkmodule im Allgemeinen einen kreisförmigen Querschnitt aufweisen. Das Verwenden entsprechender Standard-Batterien, die sich durch standardisierte äußere Abmessungen auszeichnen, ermöglicht einen sehr einfachen Lieferantenwechsel ohne den Herstellungsprozess des Antennenhalters anpassen zu müssen. Ferner kann es günstig sein, wenn die Batterieauflagefläche eine Aussparung für die Kontakte der Batterie aufweist. Dies ermöglicht eine definierte flächige Auflage der Batterieunterseite auf der Batterieauflagefläche des Antennenhalters trotz der Kontaktierung an der Batterieunterseite.

Um eine stabile Anordnung zu ermöglichen, ist vorzugsweise an dem Träger wenigstens eine Federzunge zur Fixierung der Batterie vorgesehen. Durch die Federkraft wird die Batterie gegen die Batterieauflagefläche gepresst und kraftschlüssig gehalten. Weiterhin können somit fertigungsbedingte Maßtoleranzen der Batterie ausgeglichen werden. Die Stabilität kann noch weiter verbessert werden, indem die wenigstens eine Federzunge im Wesentlichen parallel zu der Batterieauflagefläche an dem Träger vorgesehen ist. Dadurch wirkt die Federkraft der Federzunge als Normalkraft zwischen der Batterie und der Batterieauflagefläche.

In Weiterentwicklung dieses Erfindungsgedankens sind die Federzungen an gegenüberliegenden Seiten des Trägers vorgesehen. Dadurch wird eine symmetrische kraftschlüssige Verbindung erreicht, die die Batterie nahezu über ihre gesamte Fläche auf die Batterieauflagefläche drückt. Dies unterstützt die Ausrichtung der Batterie gegenüber der Batterieauflagefläche und gewährleistet die gewünschte planparallele Ausrichtung von Batteriekörper und Antennenfläche.

Diese kraftschlüssige Verbindung kann durch eine formschlüssige Verbindung ergänzt werden. Dies wird erfindungsgemäß durch eine Federzunge erreicht, die im Wesentlichen senkrecht zu der Batterieauflagefläche an dem Träger vorgesehen ist und entlang des seitlichen Umfangsrand bzw. Mantels der Batterie verläuft, wobei die Federzunge bei eingesetzter Batterie mit Federkraft an dem seitlichen Umfangsrand bzw. Mantel der Batterie anliegt. Dadurch wird verhindert, dass die Batterie beim Transport oder bei sonstigen äußeren Krafteinwirkungen aus dem Aufnahmeraum herausfallen kann. Dennoch kann die Batterie zum Austausch einfach aus dem Aufnahmeraum entnommen werden, da die Federzunge unter Druck zurückweicht.

In Weiterbildung dieses Gedankens ist an der Batterieauflagefläche eine seitliche im Wesentlichen halbkreisförmige Wandung vorgesehen ist, die vorzugsweise der senkrecht zu der Batterieauflagefläche an dem Träger vorgesehenen Federzunge gegenüberliegt. Die Federzunge drückt die Batterie gegen diese Wandung, wodurch die Position der Batterie definiert wird.

Um eine einfache, sichere und reproduzierbare Verbindung des Antennenhalters mit der Platine zu erreichen, kann es günstig sein, auch an der Unterseite des Antennenhalters wenigstens einen Positionierungsstift und/oder einen Arretierungsstift vorzusehen. Dadurch kann der Antennenhalter bspw. durch ein einfaches Einrasten in Montagelöcher der Leiterplatte/Platine mit dieser verbunden werden. Dabei sind die Montagelöcher komplementär zu dem Positionierungsstift und dem Arretierungsstift angeordnet, so dass eine zuverlässige Ausrichtung des Antennenhalters auf der Platine bzw. der Leiterplatte erreicht wird.

Es ist vorteilhaft, wenn die Arretierungsstifte einen Schnapphaken aufweisen, der durch einfaches Drücken in das Montageloch der Platine einschnappt, da dann auf eine zusätzliche Montagevorrichtung für die Verbindung von Antennenhalter und Leiterplatte verzichtet werden kann.

In manchen Fällen kann es günstig sein, an dem Träger eine seitliche halbkreisförmige Einfassung zum Einsetzen eine Diode vorzusehen. Auch eine zusätzliche Montagehilfe für die Diode kann dann entfallen.

Weitere Merkmale, Vorteile und Anwendungsmöglichkeiten der Erfindung ergeben sich aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

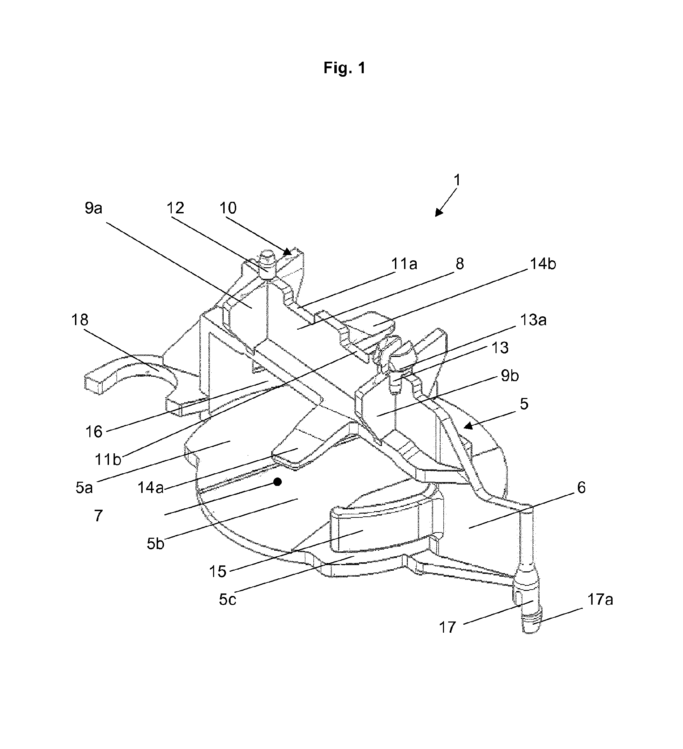

- Fig. 1: eine erfindungsgemäße Vorrichtung zur Halterung einer Antenne und einer Batterie auf einer Platine in einer perspektivischen Ansicht von schräg oben,
- Fig. 2: den erfindungsgemäßen Antennenhalter in perspektivischer Ansicht von unten,
- Fig. 3: eine Seitenansicht des Antennenhalters mit Antenne und Batterie und
- Fig. 4: eine perspektivische Ansicht eines Funkmoduls mit Antennenhalter, Antenne, Batterie, Diode und Platine.

Der in der Zeichnung dargestellte erfindungsgemäße Antennenhalter 1 zur Halterung einer Antenne 2 und einer Batterie 3 auf einer Platine 4 weist eine Batterieauflagefläche 5 in Form einer im Wesentlichen kreisförmigen Platte auf. Diese ist einstückig mit einem Träger 6 verbunden, der die Batterieauflagefläche 5 übergreift und dadurch einen Aufnahmeraum 7 für die Batterie 3 zwischen der Batterieauflagefläche 5 und dem Träger 6 bildet.

In dem den Aufnahmeraum 7 übergreifenden Abschnitt des Trägers 6 ist ein sich in Richtung des Trägers 6 erstreckender Stegabschnitt 8 des Trägers 6 ausgebildet, von dem seitliche Stege 9a, 9b vorstehen. An den oberen Flächen des Stegabschnitts 8 und der Stege 9a, 9b, die nachfolgend auch gemeinsam als Stege 8, 9a, 9b bezeichnet werden, ist eine Auflagefläche 10 für die Antenne 2 ausgebildet. Die Stege 8, 9a, 9b sind als ein Doppelkreuz angeordnet, wobei der Stegabschnitt 8 des Trägers sich mit in dessen Längsrichtung erstreckt und die Querstege 9a, 9b im Wesentlichen senkrecht hierzu angeordnet sind. Um die Antennenauflagefläche 10 möglichst klein zu halten, sind insbesondere an der Oberseite des Stegabschnitts 8 Materialausnehmungen 11a und 11b vorgesehen. Durch die Materialausnehmungen 11a, 11b wird sowohl die Leistungseffizienz als auch die Abstrahlcharakteristik der Antenne 2 verbessert.

In dem Zentrum eines der Kreuze der Antennenauflagefläche 10 befindet sich ein Positionierungsstift 12 und in dem anderen ein Arretierungsstift 13, der an seinem Ende einen Schnapphaken 13a aufweist und der beim Verbinden mit der Antenne 2 diese auf dem Antennenhalter 1 arretiert, indem er durch ein Loch der Antenne 2 durchgreift und mit dem Schnapphaken 13a einschnappt bzw. verrastet. Auf jeder Seite des Trägers 6 ist jeweils eine Federzunge 14a bzw. 14b angeordnet, die im Wesentlichen parallel zu der Batterieauflagefläche 5 ausgerichtet ist, wobei zumindest dessen freie Enden zur Batterieauflagefläche hin geneigt sind. Die Federzungen 14a, 14b drücken die Batterie 3 gegen die Batterieauflagefläche 5. An dem Träger 6 ist zudem eine weitere Federzunge 15 angeformt, die senkrecht zu der Batterieauflagefläche 5 ausgerichtet ist, um auf den seitlichen Umfangsrand bzw. Mantel einer in den Antennenhalter 1 eingesetzten Batterie 3 einzuwirken und die Batterie 3 gegen eine auf der gegenüberliegenden Seite der Batterieauflagefläche 5 vorgesehene halbkreisförmige seitliche Wandung 16 zu drücken. Hierdurch wird die Batterie 3 in dem Antennenhalter 1 fixiert.

Die kreisförmige Batterieauflagefläche 5 weist drei Abschnitte 5a, 5b, 5c auf, wobei der mittlere Abschnitt 5b etwas dünner als die beiden anderen ausgebildet ist. Der dünne mittlere Abschnitt 5b ist dazu vorgesehen einen Kontakt 21 a der Batterie 3 aufzunehmen, so dass die Batterie 3 flächig auf der Batterieauflagefläche 5 aufliegen kann.

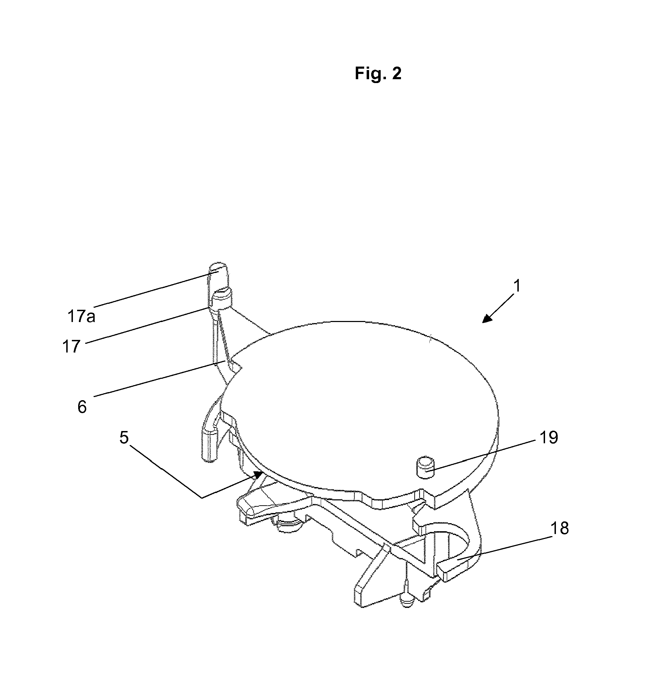

An einer Seite des Trägers 6 befindet sich auf der den Stegen 8, 9a, 9b gegenüberliegenden Unterseite ein Arretierungsstift 17 mit einem halbseitigen Schnapphaken 17a. Auf der anderen Seite des Trägers 6, bezogen auf den Aufnahmeraum 7, befindet sich eine halbkreisförmige Einfassung 18, die dazu vorgesehen ist, eine Diode 22, bspw. eine Leuchtdiode/LED, aufzunehmen. Wie aus Fig. 2 ersichtlich ist, ist an der Unterseite der die Batterieauflagefläche 5 bildenden Platte ein Positionierungsstift 19 angeordnet, der in Zusammenwirken mit dem Arretierungsstift 17 den Antennenhalter 1 in dafür entsprechend vorgesehenen Löchern der Platine 4 positioniert und fixiert.

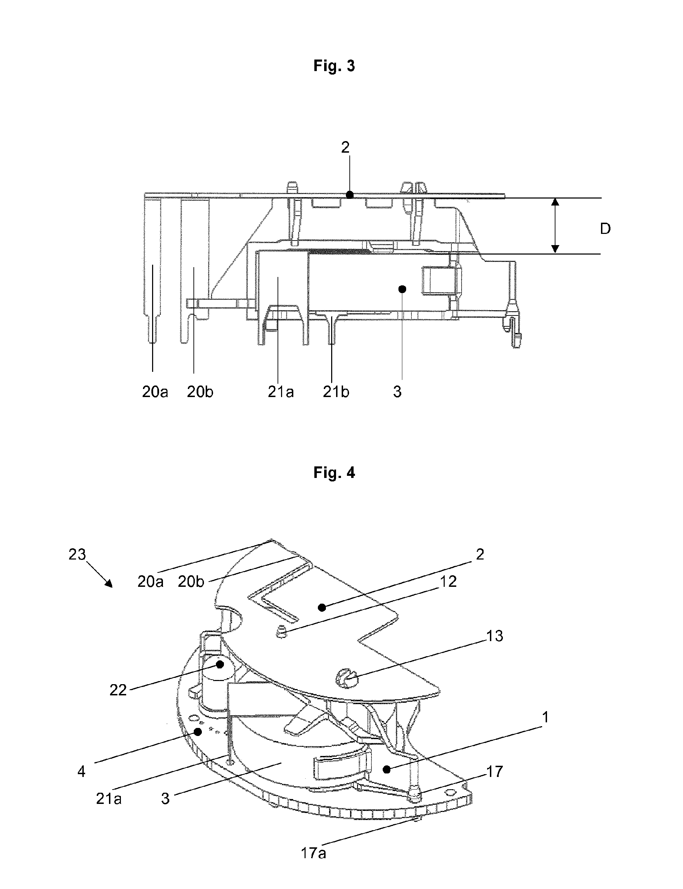

Wie sich aus der Seitenansicht gemäß Fig. 3 ergibt, ist die Antenne 2 in einem festgelegten Abstand D planparallel oberhalb der Batterie 3 angeordnet, wobei der Abstand möglichst groß gewählt sein sollte, um den störenden Einfluss des metallischen Körper der Batterie gering zu halten. Insbesondere wird bevorzugt einen Abstand D größer als 5mm, vorzugsweise sogar größer als 7 mm, gewählt. An der Antenne 2 sind Antennenkontakte 20a und 20b zur elektrischen Kontaktierung mit der Platine 4 vorgesehen. Die Batterie 3 wird durch die Batteriekontakte 21 a und 21 b mit der Platine 4 verbunden. Die Batteriekontakte 21 a und 21 b sind mit der Batterie 3 verlötet.

Die in Fig. 3 gezeigte Einheit aus Antennenhalter 1, Antenne 2 und Batterie 3 kann separat von der Platine 4 vormontiert und nach dem Zusammenbau mit der Platine 4 verbunden werden.

Der Antennenhalter 1 wird bspw. durch Spritzgießen aus Kunststoff hergestellt, wobei das Material vorzugsweise wegen eines Einsatzes in einer heißen Lötwelle temperaturbeständig ist, wegen des Schnapphakens 13a einen niedrigen E-Modul aufweist und einen niedrigen elektrischen Verlustfaktor hat, um die Abstrahlleistung der Antenne möglichst wenig zu reduzieren. Hierfür eignet sich insbesondere ein Material auf Basis von PPO (Polyphenylenoxid, auch Polyphenylenether PPE genannt). Das Spritzgussverfahren ermöglicht sehr geringe Fertigungsschwankungen und eine hohe Genauigkeit bei einem für hohe Stückzahlen kostengünstigen Herstellungsprozess.

Fig. 4 zeigt ein Funkmodul 23 bestehend aus dem erfindungsgemäßen Antennenhalter 1, der Antenne 2, der Batterie 3, der Diode 22 und der Platine 4. Dabei ist die Einheit aus Antennenhalter 1, Antenne 2 und Batterie 3 auf die Platine 4 aufgesteckt und durch den Arretierungsstift 17 arretiert. Die Arretierung des Antennenhalters 1 an der Platine 4 wird durch die Kontakte 20, 21, die mit der Platine verlötet sind, unterstützt. Die Positionierung der Antenne 2 auf dem Antennenhalter 1 und damit auch relativ zu der Batterie 3 wird durch den Positionierungsstift 12 und den Arretierungsstift 13 vorgegeben. Der Arretierungsstift 13 hält durch den Schnapphaken 13a an seinem Ende die Antenne 2 auf der Antennenauflagefläche 10. Diese Arretierung wird durch das Verlöten der Antennenkontakte 20 mit der Platine 4 unterstützt. Dazu sind die Antennenkontakte 20a, 20b auf der dem Arretierungsstift 13 gegenüberliegenden Seite der Antenne 2 angeordnet.

### Bezugszeichenliste

- 1: Antennenhalter, Vorrichtung zur Halterung von Antenne und Batterie
- 2: Antenne
- 3: Batterie
- 4: Platine
- 5: Batterieauflagefläche
- 5a, b, c: Abschnitte der Batterieauflagefläche 5
- 6: Träger
- 7: Aufnahmeraum
- 8: Stegabschnitt
- 9a, 9b: Querstege
- 10: Antennenauflagefläche
- 11a, 11b: Materialausnehmungen
- 12: Positionierungsstift
- 13: Arretierungsstift
- 13a: Schnapphaken
- 14a, 14b: Federzungen
- 15: seitliche Federzunge
- 16: halbkreisförmige Wandung
- 17: Arretierungsstift
- 17a: Schnapphaken
- 18: halbkreisförmige Einfassung
- 19: Positionierungsstift
- 20a, 20b: Antennenkontakte
- 21 a, 21 b: Batteriekontakt
- 22: Diode
- 23: Funkmodul

- D: Abstand zwischen Batterie und Antenne

## Patentansprüche

1. Vorrichtung zur Halterung einer Antenne (2) und einer Batterie (3) auf einer Platine (4), insbesondere für ein Funkmodul zur drahtlosen Übertragung von Daten, mit einer Batterieauflagefläche (5) für die Batterie (3) und einer Antennenauflagefläche (10) für die Antenne (2), **dadurch gekennzeichnet, dass** die Antennenauflagefläche (10) an einem Träger (6) vorgesehen ist, welcher einstückig mit der Batterieauflagefläche (5) verbunden ist, und dass zwischen dem Träger (6) und der Batterieauflagefläche (5) ein Aufnahmeraum (7) für die Batterie (3) ausgebildet ist.

2. Vorrichtung nach Anspruch 1, **dadurch gekennzeichnet, dass** der Träger (6) die Batterieauflagefläche (5) übergreift.

3. Vorrichtung nach Anspruch 1 oder 2, **dadurch gekennzeichnet, dass** die Antennenauflagefläche (10) durch von dem Träger (6) vorstehende Stege (8, 9a, 9b) gebildet wird.

4. Vorrichtung nach Anspruch 3, **dadurch gekennzeichnet, dass** die Stege (8, 9a, 9b) als Doppelkreuz angeordnet sind.

5. Vorrichtung nach einem der vorhergehenden Ansprüche, **dadurch gekennzeichnet, dass** an dem Träger (6) wenigstens ein Positionierungsstift (12) und/oder wenigstens ein Arretierungsstift (13) zur Fixierung der Antenne (2) vorgesehen ist/sind.

6. Vorrichtung nach einem der vorhergehenden Ansprüche, **dadurch gekennzeichnet, dass** die Batterieauflagefläche (5) durch eine im Wesentlichen kreisförmige Platte gebildet wird.

7. Vorrichtung nach einem der vorhergehenden Ansprüche, **dadurch gekennzeichnet, dass** an dem Träger (6) wenigstens eine Federzunge (14a, 14b) zur Fixierung der Batterie (3) vorgesehen ist.

8. Vorrichtung nach Anspruch 7, **dadurch gekennzeichnet, dass** die wenigstens eine Federzunge (14a, 14b) im Wesentlichen parallel zu der Batterieauflagefläche (5) an dem Träger (6) vorgesehen ist.

9. Vorrichtung nach Anspruch 7 oder 8, **dadurch gekennzeichnet, dass** die Federzungen (14a, 14b) an gegenüberliegenden Seiten des Trägers (6) vorgesehen sind.

10. Vorrichtung nach einem der Ansprüche 7 bis 9, **dadurch gekennzeichnet, dass** wenigstens eine Federzunge (15) im Wesentlichen senkrecht zu der Batterieauflagefläche (5) an dem Träger (6) vorgesehen ist.

11. Vorrichtung nach einem der vorhergehenden Ansprüche, **dadurch gekennzeichnet, dass** an der Batterieauflagefläche (5) eine seitliche, im Wesentlichen halbkreisförmige Wandung (16) vorgesehen ist, die vorzugsweise der senkrecht zu der Batterieauflagefläche (5) an dem Träger (6) vorgesehenen Federzunge (15) gegenüberliegt.

12. Vorrichtung nach einem der vorhergehenden Ansprüche, **dadurch gekennzeichnet, dass** an ihrer Unterseite wenigstens ein Positionierungsstift (19) und/oder ein Arretierungsstift (17) vorgesehen ist/sind.

13. Vorrichtung nach Anspruch 5 oder 12, **dadurch gekennzeichnet, dass** der Arretierungsstift (13, 17) einen Schnapphaken (13a, 17a) aufweist.

14. Vorrichtung nach einem der vorhergehenden Ansprüche, **dadurch gekennzeichnet, dass** an dem Träger (6) eine seitliche halbkreisförmige Einfassung (18) vorgesehen ist.
